## Europäisches Patentamt
## European Patent Office
## Office européen des brevets

(19)

(11) Veröffentlichungsnummer: **0 165 898**

**A2**

(12) # EUROPÄISCHE PATENTANMELDUNG

(21) Anmeldenummer: 85810239.5

(22) Anmeldetag: 20.05.85

(51) Int. Cl.⁴: **H 02 J 9/06**

(30) Priorität: 23.05.84 CH 2531/84

(43) Veröffentlichungstag der Anmeldung:
27.12.85 Patentblatt 85/52

(84) Benannte Vertragsstaaten:
AT DE FR GB IT NL SE

(71) Anmelder: **Remtec AG**
**Bahnhofplatz 12**
**CH-8023 Zürich(CH)**

(72) Erfinder: **Lötscher, Bernhard**
**Mühlebergstrasse 8**
**CH-8450 Andelfingen(CH)**

(74) Vertreter: **Zbinden, Paul A. et al,**
**Eder & Cie Münchensteinerstrasse 2**
**CH-4052 Basel(CH)**

(54) **Einrichtung zum Überbrücken von Ausfällen der Netz-Wechselspannung.**

(57) Die einrichtung (9) weist einen spannungserhöhenden Autotransformator (31), eine Gleichrichter (33), einen Notstromversorgungsteil (51) mit einer aufladbaren Batterie (55) und einem Wechselrichter (71) mit zwei elektronischen, beispielsweise durch Metalloxyd-Feldeffekttransistoren gebildeten Schaltern (73, 75) auf. Beim Betrieb wird dem Wechselrichter (71) vom Gleichrichter (33) und/oder vom Notstromversorgungsteil (51) elektrische Energie in Form einer positiven und einer negativen Gleichspannung ($U_+$, $U_-$) zugeführt. Der Notstromversorgungsteil (51) weist dabei eine zwischen die Batterie (55) und dem Wechselrichter 71 geschalteten Gleichspannungswandler (59) auf, der derart gesteuert und geregelt wird, dass die dem Wechselrichter (71) zugeführten Gleichspannungen ($U_+$, $U_-$) auch bei einem starken Abfall oder vollständigen Ausfall der Netz-Wechselspannung ($U_N$) betragsmässig nicht unter einen vorgegebenen Minimalwert absinken. Die Schalter (73, 75) des Wechselrichters (71) werden derart gesteuert und geregelt, dass sie aus den dem Wechselrichter (71) zugeführten gleichspannungen ($U_+$, $U_-$) eine folge von Impulsen it variierender Breite erzeugen. Diese Impulsfolge wird durch passive Filter (81, 83) wieder in eine Wechselspannung umgeformt. Die Einrichtung (9) ermöglicht, mit einem verhältnismässig klein bemessenen Transformator (31) und bei kleinen energieverlusten eine unterbruchslose Stromversorgung zu gewährleisten.

./...

EP 0 165 898 A2

Fig.1

**Remtec AG,** Zürich (Schweiz)

Einrichtung zum Überbrücken von Ausfällen der Netz-Wechselspannung

---

Die Erfindung betrifft eine Einrichtung gemäss dem Oberbegriff des Anspruchs 1, nämlich eine Einrichtung, die zwischen das Wechselspannungsnetz und mindestens einen zum Speisen mit der Netzspannung konzipierten, elektrischen Verbraucher geschaltet werden kann, um Ausfälle der Netz-Wechselspannung zu überbrükken, und zwar im wesentlichen unterbruchlos. Mit dem Begriff "im wesentlichen unterbruchlos" ist dabei gemeint, dass die Dauer eines bei einem Netzausfall allenfalls entstehenden Spannungsunterbruches weniger als 50 % und vorzugsweise weniger als 10 % der Periodendauer der Wechselspannung betragen soll, wobei vorzugsweise, abgesehen von den Nulldurchgängen der Wechselspannung, überhaupt nie ein Unterbruch auftreten soll.

Eine derartige Einrichtung kann beispielsweise zum Speisen einer elektronischen Rechen- und Datenverarbeitungsanlage verwendet werden, um zu vermeiden, dass ein Ausfall oder starker Abfall der Netzspannung nachteilige Folgen, beispielsweise einen Datenverlust verursacht. Ferner können mit einer Einrichtung der genannten Art auch andere elektrische Strom-Verbraucher, beispielsweise medizinische Geräte, gespiesen werden, bei denen Speisespannungsausfälle schwerwiegende Nachteile verursachen können.

Zb/sg/16607/Fall 1

Es sei hierbei noch bemerkt, dass mit der zur Einrichtung gehörenden Batterie natürlich nur zeitlich begrenzte Ausfälle der Netz-Wechselspannung überbrückt werden können und dass bei länger dauernden Ausfällen dann beispielsweise der Wechselspannungs-Eingang der Einrichtung aus einem mit einem Explosionsmotor angetriebenen Notstromgenerator eine Wechselspannung zugeführt oder der Verbraucher ausgeschaltet werden muss.

Eine bekannte Einrichtung zur unterbruchlosen Überbrückung von Ausfällen der Netz-Wechselspannung ist mit einem beim Betrieb an das Netz angeschlossenen Wechselspannungs-Eingang und einem Wechselspannungs-Ausgang versehen, an den ein elektrischer Verbraucher angeschlossen ist. Die Einrichtung weist einen Transformator mit drei separaten, d.h. galvanisch getrennten Wicklungen auf, von denen die erste Wicklung mit dem Wechselspannungs-Eingang und die zweite Wicklung mit dem Wechselspannungs-Ausgang verbunden ist. Die dritte Wicklung ist über eine Gleichrichter/Wechselrichterschaltung mit einer aufladbaren Batterie verbunden. Die mit Regelschaltungen versehene Gleichrichter/Wechselrichterschaltung kann elektrische Energie aus der dritten Transformatorwicklung entnehmen und der Batterie zuführen oder umgekehrt elektrische Energie aus der Batterie entnehmen und der dritten Transformatorwicklung zuführen.

Beim Betrieb dieser Einrichtung muss die ganze vom Verbraucher benötigte Energie von der ersten und/oder dritten Wicklung auf die zweite Wicklung übertragen werden, an die der Verbraucher angeschlossen ist. Im übrigen wird auch bei vorhandener Netzwechselspannung wegen deren Schwankungen praktisch dauernd entweder Energie aus der dritten Wicklung entzogen oder dieser zugeführt, wodurch im Transformator zusätzliche Verluste entstehen. Der Transformator muss daher grosse Wicklungen und einen grossen Kern aufweisen und wird dementsprechend teuer und benötigt natürlich auch viel Platz.

Der Erfindung liegt nun die Aufgabe zugrunde, eine Einrichtung zu schaffen, die die Nachteile der bekannten Einrichtung vermeidet und inbesondere ermöglicht, bei gegebenem Leistungsverbrauch des zu speisenden, elektrischen Strom-Verbrauchers, die elektrischen Verluste der Einrichtung möglichst niedrig zu halten und vor allen nur einen verhältnismässig kleinen Transformator vorsehen zu müssen.

Diese Aufgabe wird durch eine Einrichtung gelöst, die nach der Erfindung gemäss dem Anspruch 1 ausgebildet ist. Vorteilhafte Ausgestaltungen des Erfindungsgegenstandes gehen aus den abhängigen Ansprüchen hervor.

Der Erfindungsgegenstand soll nun anhand in der Zeichnung dargestellter Ausführungsbeispiele erläutert werden. In der Zeichnung zeigt

die Figur 1 ein Schema einer Einrichtung zum Überbrücken von Ausfällen der Netz-Wechselspannung mit eingangsseitig angeordnetem Transformator,

die Figur 2 ein Diagramm zur Veranschaulichung des zeitlichen Verlaufs der Netz-Wechselspannung und der dem Wechselrichter zugeführten Gleichspannungen,

die Figur 3     ein Diagramm zur Veranschaulichung des zeitlichen Verlaufs verschiedener Spannungen des Wechselrichters,

die Figur 4     ein Blockschema einer Variante einer Einrichtung mit ausgangsseitig angeordnetem Transformator und

die Figur 5     ein Blockschema einer Variante einer Einrichtung für die Dreiphasen-Speisung.

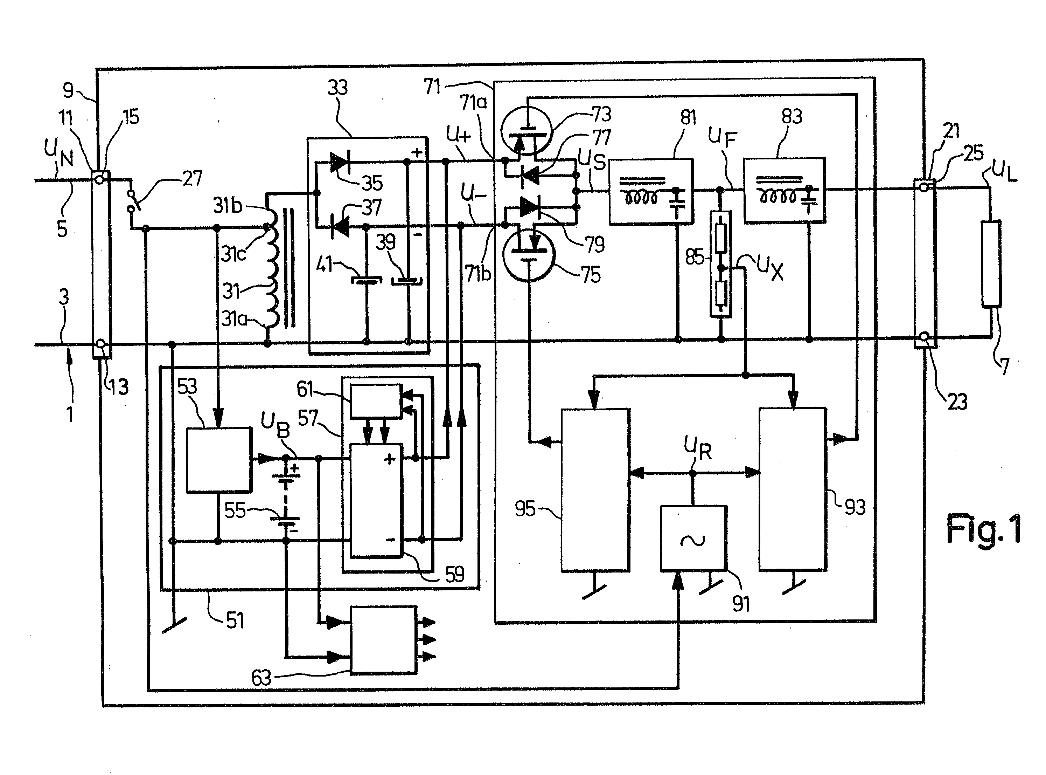

In dem in der Figur 1 dargestellten Schema bezeichnet 1 das Wechselspannungsnetz bzw. -stromnetz, von dem ein Nulleiter 3 sowie ein Phasenleiter 5 dargestellt sind und das zwischen Phasen- und Nulleiter eine Netz-Wechselspannung $U_N$ liefert. Mindestens ein elektrischer Verbraucher 7, der beispielsweise aus einem elektronischen Gerät oder einer Anlage zum Rechnen und/oder zur Datenverarbeitung besteht, ist über eine Einrichtung 9 mit dem Netz 1 verbunden, die zum Speisen des Verbrauchers 7, zum unterbruchlosen Überbrücken von Ausfällen der Netz-Wechselspannung und zum Konstanthalten der dem Verbraucher 7 zugeführten Wechselspannung dient. Die dem Verbraucher 7 mit der Einrichtung 9 zugeführte Last-Wechselspannung ist mit $U_L$ bezeichnet. Der Verbraucher 7 ist für den Betrieb mit einer Nennspannung ausgelegt, die gleich dem Nennwert, d.h. Soll-Effektivwert der Netz-Wechselspannung $U_N$ ist. Des weitern ist der Verbraucher für den Betrieb mit einer Wechselspannung augelegt, deren Frequenz gleich der Nenn- oder Soll-Frequenz der Netz-Wechselspannung ist.

Die Einrichtung 9 weist einen Wechselspannungs-Eingang 11 mit einem an den Nulleiter 3 angeschlossenen, die elektrische Masse der Einrichtung bildenden Anschluss 13 sowie einen an den Phasenleiter 5 angeschlossenen Anschluss 15 und einen Wechselspannungs-Ausgang 21 mit zwei Anschlüssen 23, 25 auf, an die der Verbraucher 7 angeschlossen ist, wobei der Anschluss 23 mit dem Anschluss 13 und damit mit dem Nulleiter 3 verbunden ist. Die Anschlüsse 13, 15, 23, 25 können beispielsweise durch Stecker gebildet oder als Schraub- und/oder Klemmanschlüsse ausgebildet sein. Die Einrichtung 9 weist einen manuell betätigbaren ein- oder eventuell zweipoligen Schalter 27 und einen Transformator zum Transformieren einer die Frequenz der Netz-Wechselspannung aufweisenden Wechselspannung, nämlich einen aufwärtstransformierenden, d.h. spannungserhöhenden Autotransformator 31 auf, dessen Wicklung zwei Endanschlüsse 31a, 31b und einen Zwischenanschluss 31c aufweist. Der Endanschluss 31a ist mit dem Anschluss 13 des Eingangs 11 der Einrichtung 9 und damit mit dem Nulleiter 3 des Netzes 1 sowie dem Anschluss 23 des Ausgangs 21 der Einrichtung 9 verbunden. Der Zwischenanschluss 31c ist über einen Netzschalter 27 mit dem Anschluss 15 des Eingangs 11 der Einrichtung 9 und damit mit dem Phasenleiter 5 des Netzes 1 verbunden. Die Windungszahlen der Wicklungsteile des Autotransformators 31 sind derart festgelegt, dass die zwischen den beiden Endanschlüssen 31a, 31b abnehmbare Sekundärspannung mindestens 10 % und vorzugsweise mindestens 15 % sowie höchstens 30 % und vorzugsweise höchstens 25 % grösser ist als die den Anschlüssen 31a, 31c zugeführte Primärspannung. Der Autotransformator 31 kann beispielsweise, bezogen auf die Primärspannung, eine etwa 17 % bis 22 % betragende Erhöhung der Spannung ergeben.

Ein Gleichrichter 33 weist zwei Halbleiterdioden 35, 37 und zwei Kondensatoren 39, 41, nämlich Elektrolytkondensatoren auf, wobei die Anode der Diode 35 und die Kathode der Diode 37 elektrisch mit dem Endanschluss 31b der Autotransformator-Wicklung verbunden sind. Die beiden Kondensatoren 39, 41 sind je zwischen die Ausgänge des Gleichrichters 33 bildenden Anschlüsse von einer der Dioden 35, 37 und die elektrische Masse der Einrichtung 9 geschaltet.

Zur Einrichtung 9 gehört ein Notstromversorgungsteil 51, mit einem Batterieladeteil 53, einer aufladbaren Batterie 55 und einer Zusatzgleichspannungs-Speisevorrichtung 57. Der Batterieladeteil 53 ist mit einem über den Schalter 27 mit dem Anschluss 15 verbundenden Eingang, einem mit der elektrischen Masse verbundenen Anschluss und einem Ausgang versehen, an den der eine Pol der Batterie 55 angeschlossen ist, deren anderer Pol mit der elektrischen Masse verbunden ist. Die Batterie 55 ist beispielsweise durch einen Bleiakkumulator gebildet. Der Nennwert der Batteriespannung $U_B$ ist kleiner als der Spitzenwert und auch kleiner als der Effektivwert der Netz-Wechselspannung $U_N$ und beträgt beispielsweise 48 V. Der Batterieladeteil 53 weist einen transformatorlosen Gleichrichter, d.h. einen ohne Zwischenschaltung eines Transformators mit den Anschlüssen 13, 15 verbundenen Gleichrichter auf. Der Ausgang dieses Gleichrichters ist über einen Gleichspannungswandler mit der Batterie 55 verbunden. Dieser Gleichspannungswandler dient zum Verkleinern der vom Gleichrichter des Batterieladeteils gelieferten Spannung in eine zum Laden der Batterie geeignete Spannung. Im übrigen ist der Batterieladeteil 53 mit einer Schaltung zum Steuern und Regeln des Gleichspannungswandlers versehen, so dass die Batterie beispielsweise nach einer starken Entladung zuerst mit konstantem Strom und danach derart geladen wird, dass ihre Spannung auf einem vorgegebenen Wert gehalten wird.

Die Zusatzgleichspannungs-Speisevorrichtung 57 weist einen Gleichspannungswandler 59, dessen Eingänge mit der Batterie 55 verbunden sind, und eine Steuer- und Regelschaltung 61 auf, die mit den Ausgängen sowie mit Steuereingängen des Gleichspannungswandlers 59 verbunden ist, um diesen in später noch näher beschriebener Weise zu steuern und zu regeln. Der Gleichspannungswandler 59 ist vorzugsweise derart ausgebildet, dass keine vom Gleichrichter 33 erzeugten Ströme über die Ausgänge des Gleichspannungswandlers in diesen einströmen können.

Der zum Batterieladeteil 53 gehörende Gleichspannungswandler und der zur Speisevorrichtung 57 gehörende Gleichspannungswandler 59 weisen Schaltungsmittel auf, um die ihnen als Gleichspannung zugeführte, elektrische Energie zur Spannungsänderung vorübergehend in eine Wechselspannung umzuwandeln, deren Frequenz wesentlich höher ist, als diejenige der Netz-Wechselspannung und die beispielsweise im Bereich von 100 KHz liegt. Der Gleichspannungswandler des Batterieladeteils 53 ist vorzugsweise transformatorlos und weist als induktives Glied lediglich eine Drossel mit Ferritkern auf, während der Gleichspannungswandler 59 mit einem Transformator mit Ferritkern versehen sein kann.

Die Einrichtung 9 weist ferner noch einen Hilfsspannungsversorgungsteil 63 auf, dessen Eingänge beispielsweise an die Batterie 55 angeschlossen sind und der mit Schaltungsmitteln versehen ist, um die für den Betrieb der verschiedenen elektronischen Bauteile der Einrichtung benötigten Hilfsspannungen zu erzeugen und diesen Bauteilen zuzuführen, wie es durch Pfeile angedeutet ist.

Ein Wechselrichter 71 ist mit zwei Eingängen 71a, 71b versehen, von denen der eine mit den eine positive Spannung abgebenden Ausgängen des Gleichrichters 33 und Gleichspannungswandlers 59 und der andere mit den eine negative Spannung abgebenden Ausgängen des Gleichrichters 33 und Gleichspannungswandlers 59 verbunden ist und denen beim Betrieb eine positive Wechselrichtereingangs-Gleichspannung $U_+$ bzw. eine negative Wechselrichtereingangs-Gleichspannung $U_-$ zugeführt wird. Der Wechselrichter 71 weist zwei steuerbare, elektronische Schalter 73, 75 auf, die eingangsseitig mit den beiden genannten Eingängen des Wechselrichters 71 und ausgangsseitig mit einander und mit dem Eingang eines ebenfalls zu diesem gehörenden, ersten Filters 81 verbunden sind. Die beiden elektronischen Schalter 73, 75 sind vorzugsweise je durch einen Metalloxyd-Feldeffekttransistor gebildet. Die Source-Drain-Strecken der beiden Feldeffekttransistoren sind je durch eine Diode 77 bzw. 79 überbrückt. Die beiden miteinander verbundenen Dioden 35 und 77 haben dabei umgekehrte Durchlassrichtungen. Das Entsprechende gilt für die Dioden 37 und 79. Der Ausgang des ersten Filters 81 ist mit dem Eingang eines zweiten Filters 83 verbunden, dessen Ausgang mit dem Anschluss 25 des Wechselspannungs-Ausgangs 21 der Einrichtung verbunden ist und diesem beim Betrieb die Last-Wechselspannung $U_L$ zuführt. Die beiden Filter sind auch noch mit der elektrischen Masse verbunden, weisen nur passive Elemente, nämlich mindestens eine Drossel und einen Kondensator auf, und bilden je einen Tiefpass. Zwischen dem Ausgang des ersten Filters 81 und die elektrische Masse ist noch ein beispielsweise aus zwei Widerständen bestehender Spannungsteiler 85 geschaltet. Der Wechselrichter weist ferner einen zum Erzeugen mindestens einer zeitlich variierenden Spannung dienenden Referenz-Spannungsgeber 91 und zwei Steuer- und Regelschaltungen 93, 95 auf. Der Referenz-Spannungsgeber 91 weist einen über den Schalter 27 mit dem Anschluss 15 des Wechselspannungs-Eingangs 11 verbundenen Eingang und einen Ausgang auf, der beim Betrieb die Referenz-Wechselspannung $U_R$ liefert und mit Referenz-Spannungseingängen der beiden Steuer- und Regelschaltungen 93, 95 verbunden ist. Die beiden letzteren weisen auch je einen mit dem Zwischenanschluss des Spannungsteilers 85 verbundenen Eingang auf. Der Ausgang der Steuer- und Regelschaltung 93 ist mit dem Steueranschluss des elektronischen Schalters 73, d.h. dem Gate des diesen bildenden Feldeffekttransistors verbunden. Der Ausgang der Steuer- und Regelschaltung 95 ist mit dem Gate des den Schalter 75 bildenden Feldeffekttransistors verbunden.

Im übrigen kann die Einrichtung 9 noch nicht dargestellte, elektrische Sicherungen, Signalleuchten zur Anzeige der verschiedenen Betriebszustände, Mittel zur Anzeige des Ladezustandes der Batterie 55 und dergleichen Bauteile aufweisen.

Nun soll der Betrieb der Einrichtung 9 erläutert werden. Dabei sei zur Klarstellung noch bemerkt, dass mit den bereits erwähnten Spannungen $U_N$, $U_B$, $U_+$, $U_-$, $U_L$, $U_R$ und den noch zu erwähnenden Spannungen, soweit nichts anderes gesagt wird, stets die bezüglich des Nulleiters bzw. der elektrischen Masse gemessenen Spannungen gemeint sind. Im übrigen wird im folgenden als Beispiel angenommen, dass der Nennwert der Netz-Wechselspannung und dementsprechend die Nennspannung des Verbrauchers 220 V und die Nenn- oder Soll-Frequenz der Netz-Wechselspannung und die Nenn-Frequenz der vom Verbraucher benötigten Last-Wechselspannung 50 Hz betragen. Zur Inbetriebsetzung der Einrichtung 9 wird im übrigen selbstverständlich zuerst der Schalter 27 geschlossen.

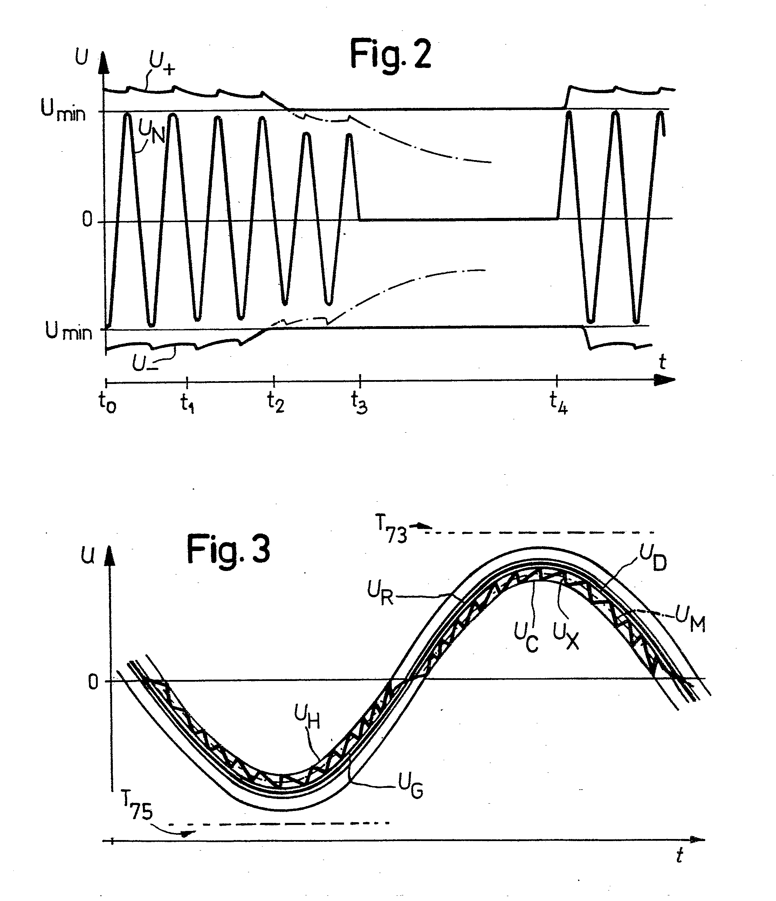

In dem in der Figur 2 dargestellten Diagramm ist auf der Abszisse die Zeit t und auf der Ordinate der Momentanwert U der Netz-Wechselspannung $U_N$, der positiven Wechselrichtereingangs-Gleichspannung $U_+$ und der negativen Wechselrichtereingangs-Gleichspannung $U_-$ aufgetragen. Die Zusatzgleichspannungs-Speisevorrichtung 57 dient zur Kontrolle und Beeinflussung der Wechselrichtereingangs-Gleichspannungen $U_+$, $U_-$. Wie nun erläutert werden soll, ist bei der vorliegenden Ausführungsform der Einrichtung 9 vorgesehen, dass der Momentanwert der Wechselrichtereingangs-Gleichspannungen $U_+$, $U_-$ betragsmässig nie unter Minimalwerte mit den in der Figur 2 mit $U_{min}$ bezeichneten Beträgen absinkt, wobei die Beträge $U_{min}$ der beiden Minimalwerte beispielsweise mindestens ungefähr gleich gross und mindestens ungefähr gleich dem Soll-Scheitelwert der Netz-Wechselspannung $U_N$ oder etwas grösser als dieser sind.

In dem zwischen den Zeitpunkten $t_0$ und $t_1$ liegenden Zeitintervall ist der Effektivwert der Netz-Wechselspannung $U_N$ gleich dem Sollwert von 220 V und der Scheitelwert dementsprechend ungefähr 311 V. Das Übersetzungsverhältnis des Autotransformators 31 sei beispielsweise derart festgelegt, dass er dem Gleichrichter 33 bei Nennlast eine Wechselspannung mit einem Scheitelwert von ungefähr 370 V zuführt. An den beiden Ausgängen des Gleichrichters 33 erscheinen dann die pulsierenden Gleichspannungen deren Spitzenwerte bei normaler Belastung annähernd gleich den Scheitelwerten der vom Autotransformator 31 gelieferten Wechselspannung sind.

Der Schwankungs- oder Pulsationsbereich, in dem die beiden vom Gleichrichter gelieferten Gleichspannungen schwanken oder pulsieren, kann beispielsweise etwa 10 bis 20 V betragen. Diese pulsierenden Gleichspannungen sind im ganzen zwischen $t_0$ und $t_1$ liegenden Zeitintervall betragsmässig grösser als die Minimalwerte $U_{min}$ und die Steuer- und Regelschaltung 61 der Vorrichtung 57 steuert den Gleichspannungswandler 59 im zwischen $t_0$ und $t_1$ liegenden Zeitintervall derart, dass der Gleichspannungswandler 59 keine Energie zu den Eingängen 71a, 71b des Wechselrichters 71 liefert, so dass die Wechselrichtereingangs-Gleichspannungen $U_+$, $U_-$ gleich den vom Gleichrichter 33 gelieferten Gleichspannungen sind.

In dem zwischen den Zeitpunkten $t_1$ und $t_2$ liegenden Zeitintervall sind der Effektiv- und Scheitelwert der Netzspannung $U_N$ infolge der beim normalen Betrieb auftretenden Netzspannungsschwankungen beispielsweise etwa 5 bis 10 % kleiner als die entsprechenden Sollwerte. Dementsprechend sinken natürlich auch die vom Gleichrichter 33 gelieferten, pulsierenden Gleichspannungen etwas ab, liegen aber immer noch oberhalb der zum Betrieb des Wechselrichters benötigten Minimalwerte. Auch in diesem Betriebsintervall sind die dem Wechselrichter 71 zugeführten Gleichspannungen $U_+$, $U_-$ noch gleich den vom Gleichrichter 33 gelieferten Gleichspannungen.

In dem sich vom Zeitpunkt $t_2$ bis zum Zeitpunkt $t_3$ erstreckenden Zeitintervall sinkt nun der Effektivwert der Netz-Wechselspannung $U_N$ auf einen Wert ab, der beispielsweise ungefähr oder etwas mehr als 15 % unter dem Sollwert liegt. Dementspreechend sinken nun auch die Grössen der vom Gleichrichter gelieferten, pulsierenden Gleichspannungen betragsmässig mindestens zeitweise

unter die Minimalwerte $U_{min}$ ab, wie es in der Figur 2 durch strichpunktierte Kurventeile angedeutet ist. Die Steuer- und Regelschaltung 61 der Zusatzgleichspannungs-Speisevorrichtung 57 steuert und regelt nun den Gleichspannungswandler 59 derart, dass dieser den Eingängen des Wechselrichters 71 statt und/oder zusätzlich zu der vom Gleichrichter 33 gelieferten elektrischen Energie elektrische Energie zuführt, so dass die Wechselrichtereingangs-Gleichspannungen $U_+$, $U_-$ betragsmässig auf den Minimalwerten $U_{min}$ gehalten werden.

Im Zeitintervall zwischen den Zeitpunkten $t_3$, $t_4$ fällt nun die Netz-Wechselspannung $U_N$ vorübergehend vollständig aus. Die Steuer- und Regelschaltung 61 der Zusatzgleichspannungs-Speisevorrichtung 57 steuert und regelt nun den Gleichspannungswandler 59 derart, dass dieser die Gleichspannungen $U_+$, $U_-$ betragsmässig weiterhin konstant auf den Mininalwerten $U_{min}$ hält. In dieser Betriebsphase kommt nun also die ganze, dem Wechselrichter 71 in Form der Wechselrichtereingangs-Gleichspannungen $U_+$, $U_-$ zugeführte, elektrische Energie aus dem Notstromversorgungsteil 51, wodurch dessen Batterie 55 langsam entladen wird.

Im Zeitpunkt $t_4$ steigt die Netz-Wechselspannung $U_N$ wieder auf ihren Nennwert an. Dementsprechend wird dem Wechselrichter 71 nun wieder aus dem Gleichrichter 33 stammende, elektrische Energie zugeführt. Im übrigen wird nun die Batterie 55 über den Batterieladeteil 53 wieder aufgeladen, bis die Batteriespannung $U_B$ den vorgegebenen Sollwert erreicht.

Der Effektivwert der Netz-Wechselspannung kann auch auf einen Wert ansteigen der beispielsweise bis etwa 10 % oder 15 % über dem Nennwert liegt. In diesem Fall steigen auch die vom Gleichrichter 33 gelieferten Gleichspannungen entsprechend an. Selbstverständlich führt der Notstromversorgungsteil 51 in dieser Betriebsphase den Eingängen 71a, 71b des Wechselrichters 71 keine Energie zu.

Wie aus der vorgängig beschriebenen Arbeitsweise der dem Wechselrichter vorgeschalteten elektronischen Bauteile hervorgeht, werden den Eingängen 71a, 71b des Wechselrichter 71 unabhängig vom Vorhandensein oder Nichtvorhandensein der Netz-Wechselspannung dauernd die Gleichspannungen $U_+$, $U_-$ zugeführt. Deren Grössen können dabei betragsmässig zwischen den Minimalwerten $U_{min}$ und oberen Grenzwerten schwanken, die entsprechend den Maximalwerten der Netzwechselspannung bis etwa 40 % grösser sein können als $U_{min}$.

Die Regelzeitkonstante der Steuer- und Regelschaltung 61 ist wesentlich kleiner als die halbe Periodendauer der Netz-Wechselspannung und die Entlade-Zeitkonstante, mit der die Kondensatoren 39, 41 durch den Wechselrichter 71 und Verbraucher 7 entladen werden. Diese Regelzeitkonstante beträgt beispielsweise höchstens 1 ms. Wenn die vom Gleichrichter 33 gelieferten Gleichspannungen daher wegen eines starken Abfalls oder vollständigen Ausfalls der Netz-Wechselspannung betragsmässig unter die vorgegebenen Minimalwerte fallen, werden die Spannungen $U_+$, $U_-$ innerhalb einer Zeitdauer auf die Minimalwerte geregelt, die kurz im Vergleich zur Dauer einer Halbwelle der Netz-Wechselspannung ist.

Während des Betriebs der Einrichtung führt der Hilfsspannungsversorgungsteil 63 dem Wechselrichter und den übrigen Teilen der Einrichtung die für den Betrieb von deren elektronischen Komponenten benötigten Hilfsspannungen zu. Der Hilfsspannungsversorgungsteil 63 wird dabei im Pufferbetrieb entweder mit aus den Netz 1 stammender elektrischer Energie und/oder mit aus der Batterie 55 stammender elektrischer Energie gespiesen.

Nun soll unter Bezugnahme auf das in der Figur 3 dargestellte Diagramm die Funktion des Wechselrichters 71 beim Betrieb der Einrichtung 9 erläutert werden. Die Figur 3 weist eine Abszissenachse, auf der die Zeit t aufgetragen ist, und Kurven auf, die schematisiert den zeitlichen Verlauf des nicht massstäblich auf der Ordinate aufgetragenen Momentanwerts U verschiedener Spannungen darstellen.

Der Referenz-Wechselspannungsgeber 91 erzeugt die Referenz-Wechselspannung $U_R$, deren Verlauf in der Figur 3 aufgezeichnet ist und die sinusförmig mit der Zeit t ändert und eine zeitlich konstante Amplitude hat. Der Referenz-Wechselspannungsgeber 91 ist dabei beispielsweise derart ausgebildet, dass die von ihm erzeugte Referenz-Wechselspannung $U_R$, wenn am Wechselspannungs-Eingang 11 eine Netz-Wechselspannung vorhanden ist, synchron und phasengleich zu dieser ist. Wenn hingegen die Netz-Wechselspannung ausfällt, ist die vom Geber 91 erzeugte Referenz-Wechselspannung dann natürlich nicht mehr an die Netz-Wechselspannung gebunden und hat im übrigen deren Soll-Frequenz vom 50 Hz. Wenn die Netz-Wechselspannung nach einem vorübergehenden Unterbruch wieder am Wechselspannungs-Eingang 11 erscheint, ist die vom Geber 91 erzeugte Referenz-Wechselspannung $U_R$ im allgemeinen nicht mehr zur Netz-Wechselspannung synchron und wird vom Geber 91 während einer gewissen Übergangsphase so lange verändert, bis sie wieder synchron und phasengleich zur Netz-Wechselspannung ist. Der Wechselspannungsgeber 91 könnte jedoch statt dessen auch ausgebildet sein, um dauernd, d.h. auch bei vorhandener Netz-Wechselspannung, eine von der letzteren unabhängige Referenz-Wechselspannung mit der Soll-Frequenz der Netz-Wechselspannung zu erzeugen.

Die beiden Steuer- und Regelschaltungen 93, 95 erzeugen je zwei Grenzspannungen $U_C$, $U_D$ bzw. $U_G$, $U_H$. Die Momentanwerte der von der Schaltung 93 erzeugten, ersten Grenzspannung $U_C$ sind algebraisch um einen konstanten Differenzbetrag kleiner und die Momentanwerte der von der Schaltung 95 erzeugten, zweiten Grenzspannung $U_H$ um einen kostanten Differenzbetrag grösser als die Momentanwerte der Referenz-Wechselspannung $U_R$, wobei die beiden genannten Differenzbeträge gleich gross sein können. Die von der Schaltung 93 erzeugte, dritte Grenzspannung $U_D$ liegt zwischen der Spannung $U_R$ und der Grenzspannung $U_C$ und die von der Schaltung 95 erzeugte, vierte Grenzspannung $U_G$ zwischen der Spannung $U_R$ und der Grenzspannung $U_H$, wobei die Beträge, um die die Grenzspannungen $U_D$, $U_G$ von der Spannung $U_R$ abweichen, ebenfalls zeitlich konstant und beispielsweise gleich gross sind. Die Grenzspannungen $U_C$, $U_D$, $U_G$, $U_H$ sind in der Figur 3 ebenfalls dargestellt, wobei aber die Differenzen zwischen ihnen und $U_R$ zur Verdeutlichung im Verhältnis zu $U_R$ in stark übertriebener Grösse gezeichnet wurden. In Wirklichkeit sind die Differenzen zwischen $U_D$ bzw. $U_G$ und $U_R$ betragsmässig beispielsweise nur etwa 0,15 % und die Differenzen zwischen $U_C$ und $U_D$ bzw. $U_G$ und $U_H$ betragsmässig beispielsweise nur etwa 0,6 % des Scheitelwertes der Referenz-Wechselspannung $U_R$.

Die Figur 3 zeigt auch noch den Verlauf der den Steuer- und Regelschaltungen 93, 95 vom Spannungsteiler 85 zugeführten, pulsierenden Wechselspannung $U_X$, die proportional zur Ausgangsspannung $U_F$ des ersten Filters 81 ist. Die Wechselspannung $U_X$ ist also sowohl mit der an der Ausgangsseite der beiden Schalter 73, 75 erscheinenden Schalterspannung $U_S$ als auch mit der Last-Wechselspannung $U_L$ mehr oder weniger eng verknüpft und gibt ein Mass für den Istwert der vom Wechselrichter erzeugten Last-Wechselspannung $U_L$. In der Figur 3 ist durch eine strichpunktierte Linie auch noch die Mittel-Wechselspannung $U_M$ dargestellt, um die die pulsierende Wechselspannung $U_X$ beim Regeln herumschwankt und die im wesentlichen proportional zur Last-Wechselspannung $U_L$ ist.

Die Steuer- und Regelschaltungen 93, 95 sind mit Komparatoren ausgerüstet, um die Momentanwerte der pulsierenden Wechsel-Spannung $U_X$ mit den Momentanwerten der Grenzspannungen $U_C$, $U_D$, $U_G$, $U_H$ zu vergleichen. Die Steuer- und Regelschaltungen 93, 95 weisen ferner elektronische Schaltungsmittel auf, um Steuerspannungen ein- und auszuschalten, die den Steuer-Anschlüssen der elektronischen Schalter 73, 75, d.h. den Gates der diese Schalter bildenden Feldeffekttransistoren, zugeführt werden, um diese leitend zu machen und wieder zu sperren.

Die Schalterspannung $U_S$ ist durch eine Impulsfolge gebildet, die aus abwechselnd von den beiden Schaltern 73, 75 erzeugten Impulspaketen besteht. Die Schalterspannung $U_S$ wird im ersten Filter 81 gemittelt und geglättet und danach im zweiten Filter 83 noch weiter geglättet. Bei der Erzeugung der Impulsfolge werden die Einschaltdauern und -abstände der Schalter 73, 75 und damit die Breiten und Abstände der Impulse durch die Steuer- und Regelschaltungen 93, 95 derart variiert, dass die pulsierende Wechselspannung $U_X$ zwischen den Grenzspannungen $U_C$ und $U_H$ liegt. Wenn nämlich die Wech-

selspannung $U_X$ unter die Grenzspannung $U_C$ absinkt, schaltet die Steuer- und Regelschaltung 93 jeweils den durch einen Feldeffekttransistor gebildeten Schalter 73 so lange ein, bis die Spannung $U_X$ auf die Grenzspannung $U_D$ angestiegen ist, so dass die Spannung $U_X$ ungefähr während der Dauer der positiven Halbwellen der Referenz-Wechselspannung $U_R$ zwischen den Grenzspannungen $U_C$ und $U_D$ hin und her pendelt. Wenn hingegen die Spannung $U_X$ oder genauer gesagt, deren algebraische Grösse, üer die Grenzspannung $U_H$ ansteigt, schaltet die Steuer- und Regelschaltung 95 jeweils den Schalter 75 so lange ein, bis die Spannung $U_X$ auf die Grenzspannung $U_G$ abgesunken ist, so dass also die Spannung $U_X$ ungefähr während der Dauer der negativen Halbwellen der Referenz-Wechselspannung $U_R$ zwischen den Grenzspannungen $U_H$ und $U_G$ hin und her pendelt. Die Steuer- und Regelschaltungen 93, 95 und die beiden Schalter 73, 75 bilden also paarweise zusammen gewissermassen zwei Zweipunktregler. Die Einschaltzeitdauern $T_{73}$, $T_{75}$ der beiden Schalter 73 bzw. 75 sind in der Figur 3 durch Striche dargestellt, die natürlich mit den Breiten der vom betreffenden Schalter 73 bzw. 75 gebildeten Impulse übereinstimmen und zudem auch die positiven bzw. negativen Scheitel dieser Impulse andeuten. Die Breiten und Abstände der Impulse werden dabei durch die Regelgeschwindigkeiten der beiden Zweipunktregler bestimmt und diese Regelgeschwindigkeiten hängen ihrerseits unter anderem von der Ausbildung des ersten Filters 81 ab. Die beiden Filter 81, 83 haben beispielsweise Grenzfrequenzen von 5 kHz und das erste Filter ist im übrigen derart bemessen, dass die Abstände der aufeinander folgenden Impulse eines während einer Halbwelle der Spannung $U_R$ erzeugten Impulspaketes wesentlich kleiner sind als die Dauer einer Halbwelle der Spannung $U_R$. Der mittlere Impulsabstand kann beispielsweise in der Grösse von 0,05 ms liegen. Die Abstände der Impulse sind also im Vergleich zur Dauer einer Periode der Spannung $U_R$ in Wirklichkeit wesentlich kleiner, als es in der Figur 3 dargestellt ist. Das zweiter Filter 83 ist derart bemessen, dass die Last-Wechselspannung $U_L$ dann eine möglichst glatte und stetige sowie annähernd sinusförmige Kurve bildet.

Der Effektivwert der Last-Wechselspannung $U_L$ ist unabhängig von der Grösse der Netz-Wechselspannung und vom Vorhandensein oder Nichtvorhandensein der letzteren annähernd konstant. Im übrigen bildet der transformatorlose Wechselrichter 71 auch eine relativ niederohmige Spannungsquelle, so dass die Last-Wechselspannung $U_L$ zudem annähernd unabhängig von der Grösse des vom Verbraucher 7 gebildeten Lastwiderstandes ist, solange die vorgesehene Maximalbelastung nicht überschritten wird.

Die Dioden 77, 79 ermöglichen, dass den von den Dioden 35, 37 gelieferten Strömen entgegengesetzte Gegenströme vom ersten Filter 81 zu den Kondensatoren 39, 41 fliessen können. Dies ermöglicht einen Abbau bzw. Ausgleich der von den Impulsen der Gleichspannungen $U_+$, $U_-$ in den Drosseln der Filter 81, 83 induzierten Gegenspannungen sowie auch den Fluss von Wechselströmen, die wegen allfälliger Blindwiderstandanteile des Widerstands bzw. der Impedanz des Verbrauchers 7 gegen die Last-Wechselspannung $U_L$ phasenverschoben sind. Ein wesentlicher Vorteil des Wechselrichter 71 besteht daher auch darin, das die vom Verbraucher 7 gebildete Last ohne weiteres einen verhältnismässig grossen Blindanteil haben, d.h. einen induktiven oder kapazitiven Lastanteil, haben darf. Falls der Verbraucher 7 einen induktiven oder kapazitiven Lastanteil verursacht, können sich die

Nulldurchgänge der Spannung $U_X$ im übrigen eventuell ein wenig gegen diejenigen der Spannung $U_R$ verschieben.

Die Einrichtung 9 kann beispielsweise zum Speisen eines Verbrauchers 7 ausgelegt sein, der eine im Bereich von 0,2 kW bis 2 kW liegende Nennleistung aufweist. Die Spannungserhöhung des Autotransformators 31 wird bei der Konzeption der Einrichtung möglichst niedrig gehalten und nämlich gemäss den weiter vorn angegebenen Werten gerade so gross gemacht, dass die durch den Autotransformator 31 selbst sowie die durch den Gleichrichter 33 und den Wechselrichter 71 verursachten Spannungsverluste und die beim normalen Betrieb eines Wechselspannungsnetzes auftretenden, etwa bis 10 % oder 15 % der Nennspannung betragenden Abfälle der Netzspannung vom Wechselrichter aufgefangen und ausgeregelt werden könne, ohne dass den Wechselrichter-Eingängen 71a, 71b aus der Batterie stammende Energie zugeführt werden muss. Da der Eingang des Batterieladeteils 53, bezogen auf die Richtung des Energieflusses vom Wechselspannungs-Eingang 11 zum Wechselspannungs-Ausgang 21, vor dem Autotransformator 31 und vor dem Gleichrichter 33 mit dem Wechselspannungs-Eingang 11 verbunden ist, muss zudem die zum Aufladen der Batterie benötigte Energie nicht den Autotransformator 31 passieren. Ein wesentlicher Vorteil der Einrichtung 9 besteht daher darin, dass nur ein einziger Transformator zum Transformieren einer die Frequenz der Netz-Wechselspannung aufweisenden Spannung vorhanden sein muss, der als Autotransformator ausgebildet ist und nur eine geringe Spannungserhöhung erzeugen muss, so dass er bei vorgegebener Leistung des zu speisenden Verbrauchers 7 viel kleiner bemessen sein kann, als ein Transformator, der galvanisch getrennte Primär- und Sekundärwicklungen aufweisen würde und eine beispielsweise durch Wechselrichter der Batteriespannung von 48 V gebildete 50 Hz-Wechselspannung auf die Grösse der Netz-Wechselspannung hinauf transformieren müsste.

Es sei hierbei bemerkt, dass natürlich der im Gleichspannungswandler 59 vorhandene Transformator die durch Zerhacken oder Wechselrichtern aus der Batteriespannung gebildete Spannung auf die Grösse der Spannungen $U_+$, $U_-$ hinauf transformieren muss. Da die Arbeitsfrequenz des Gleichspannungswandlers 59 höher ist als die Frequenz der Netz-Wechselspannung und beispielsweise in der Grösse von 100 kHz liegt, kann der Transformator des Gleichspannungswandlers 59 verhältnismässig klein sein.

Ähnliches gilt für die Drossel des zum Batterieladeteil 53 gehörenden Gleichspannungswandlers. Im übrigen ist zum Aufladen der Batterie im Maximum nur etwa 10 % der Leistung erforderlich, die die Batterie bei einem Ausfall der Netz-Wechselspannung abgeben muss, so dass der Gleichspannungswandler des Batterieladeteils 53 für eine Leistung ausgelegt werden kann, die wesentlich kleiner ist als die Leistung des Gleichspannungswandlers 59. Allenfalls im Hilfsspannungsversorungsteil 63 vorhandene Gleichspannungswandler müssen ebenfalls nur eine verhältnismässig geringe elektrische Leistung verarbeiten können.

Eine wichtige, vorteilhafte Eigenschaft der Einrichtung 9 besteht auch darin, dass die Einrichtung im Vergleich zu der vom Verbraucher 7 benötigten Leistung nur geringe Verlust verursacht.

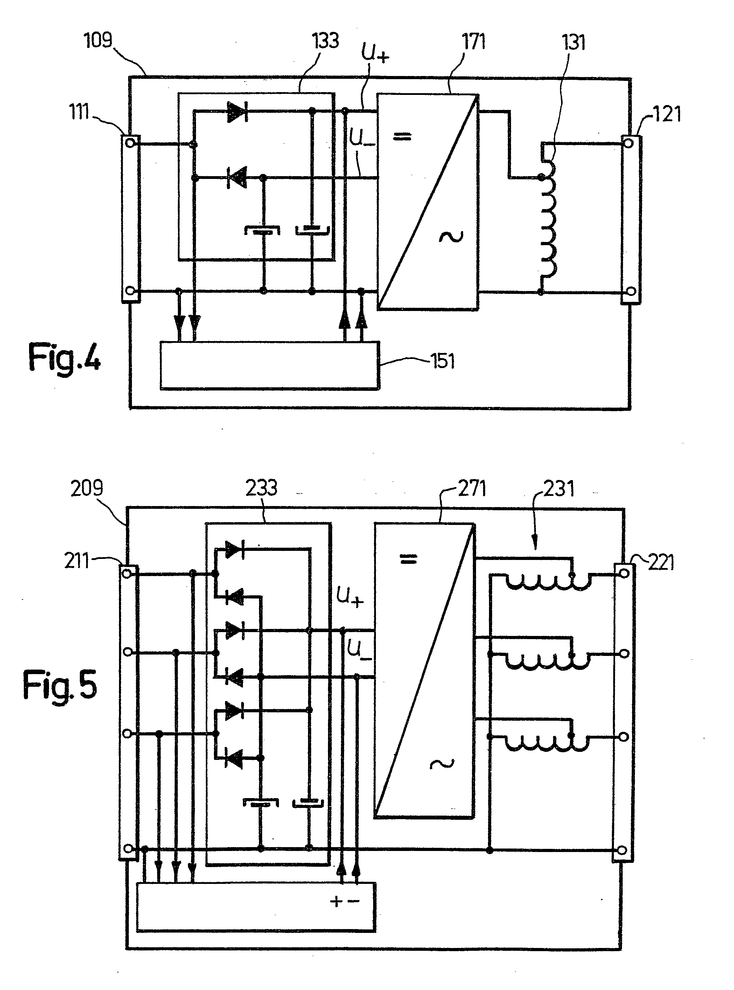

Die Einrichtung 109, deren Blockschema in der Figur 4 dargestellt ist, weist eine Wechselspannungs-Eingang 111, einen Wechselspannungs-Ausgang 121, einen Autotransformator 131, einen Gleichrichter 133, einen Notstromversorgungsteil 151 und einen Wechselrichter 171 auf. Diese Bauteile der Einrichtung 109 sind weitgehend ähnlich ausgebildet wie die entsprechenden, ein um 100 kleineres Bezugszeichen aufweisenden Bauteile der Einrichtung 9, wobei sich aber die beiden Einrichtungen 9, 109 dadurch unterscheiden, dass der Autotransformator 131 der Einrichtung 109 nicht zwischen den Wechselspannungs-Eingang und den Gleichrichter, sondern zwischen den Wechselrichter 171 und den Wechselspannungs-Ausgang 121 geschaltet ist und die vom Wechselrichter 171 gelieferte Wechselspannung auf die Grösse des Sollwertes der Netz-Wechselspannung erhöht. Der zwischen der Batterie und den Ausgängen des Notstromversorgungsteils 151 vorhandene Gleichspannungswandler wird bei der Einrichtung 109 dementsprechend derart gesteuert und geregelt, dass der Betrag der Spannungen $U_+$, $U_-$ nie unter einen Minimalwert absinkt, der etwa gleich dem Betrag denjenigen Spannungen ist, die vom Gleichrichter 133 geliefert werden, wenn die Netz-Wechselspannung auf den kleinsten beim normalen Betrieb auftretenden Wert, d.h. auf einen etwa 10 % bis 15 % unter der Nennspannung liegenden Wert absinkt.

Die Figur 5 zeigt das Blockschema einer Einrichtung 209, die zum Anschluss an ein Wechselspannungsnetz mit drei Phasenleitern und einem Nulleiter und zum Speisen mindestens eines für den Dreiphasenbetrieb ausgelegten Verbrauchers bestimmt ist. Die Einrichtung 209 weist dementsprechend einen Wechselspannungs-Eingang 211 und einen Wechselspannungs-Ausgang 221 mit je drei Phasenleiter-Anschlüssen und einem Nulleiter-Anschluss, einen Gleichrichter 233 mit drei paar Dioden, einen Wechselrichter 271 mit drei Paar elektronischen Schaltern und einen Autotransformator 231 mit drei Wicklungen für den Dreiphasenbetrieb oder drei separate Autotransformatoren für je eine Phase auf. Die zum Steuern und Regeln der elektronischen Schalter des Wechselrichters 271 vorhandenen Steuer- und Regelschaltungsmittel sind dabei natürlich derart ausgebildet, dass bei der Wechselrichtung aus den beiden Gleichspannungen $U_+$, $U_-$ drei phasenmässig um 120$^\circ$ gegeneinander verschobene Wechselspannungen erzeugt werden. Der Dreiphasen-Autotransformator kann dabei, wie in der Figur 5 dargestellt, zwischen den Wechselrichter 271 und den Wechselspannungs-Ausausgang 221 geschaltet sein, könnte aber statt dessen analog wie bei der Einrichtung 9 schaltungsmässig zwischen dem Wechselspannungs-Eingang und dem Gleichrichter angeordnet werden.

Die Einrichtungen können noch in anderer Hinsicht modifiziert werden.

Beispielsweise ist es vorteilhaft, die Wechselrichter 71, 171, 271 noch mit Mitteln zu versehen, um im Fall, dass die Wechselspannungs-Ausgänge 21, 121, 221 kurz geschlossen werden, die Ströme zu begrenzen. Bei der in der Figur 1 dargestellten Variante können beispielsweise die Steuer- und Regelschaltungen 93, 95 derart ausgebildet werden, dass sie im Fall eines Kurzschlusses die Schalter 73, 75 nach jedem Nulldurchgang der Last-Wechselspannung $U_L$ nur solange Einschalten, als der dem Wechselspannungs-Ausgang 21 abgenommene Strom unter einem vorgegebenen Grenzwert bleibt.

Im weiteren kann der Schalter 27 vorzugsweise derart ausgebildet und/oder angeordnet werden, dass er gegen unbeabsichtigtes Betätigen möglichst geschützt ist. Der Schalter 27 kann beispielsweise als Schlüsselschalter ausgebildet oder eventuell überhaupt weggelassen werden.

Ferner können anstelle des Gleichspannungswandlers 59 zwei separate Gleichspannungswandler vorgesehen werden, von denen der eine zum Erzeugen der bezüglich Masse positiven und der andere zum Erzeugen der bezüglich Masse negativen Gleichspannung $U_+$ bzw. $U_-$ dient.

Des weitern könnte mann zur Vergrösserung der schaltbaren Leistung jeden der elektronischen Schalter durch zwei oder mehr parallel geschaltete Metalloxyd-Feldeffekttransistoren bilden. Im übrigen könnten die Schalter 73, 75 statt durch Metalloxyd-Feldeffekttransistoren eventuell durch andere elektronische Schaltorgane gebildet werden.

Falls etwa der Autotransformator 131 gemäss der Figur 4, bezogen auf die Richtung des Energieflusses, nach dem Wechselrichter 171 angeordnet wird, kann das dem zweiten Filter 83 des Wechselrichters 71 entsprechende Filter statt im Wechselrichter 171 schaltungsmässig auf der Ausgangsseite der Autotransformators angeordnet werden. Ferner könnte man statt der zwei hintereinander geschalteten Filter 81, 83 eventuell nur ein einziges Filter vorsehen oder die Filter statt als Tiefpass als Bandpass ausbilden, wobei dessen Mittelfrequenz gleich der Nennfrequenz der Netz-Wechselspannung gemacht würde.

Ferner könnten die Grenzspannungen $U_C$, $U_D$, $U_G$, $U_H$ natürlich statt in den Steuer- und Regelschaltungen 93, 95 schon vom Referenz-Spannungsgeber 91 erzeugt werden. Des weitern können der Referenz-Spannungsgeber 91 und die Steuer- und Regelschaltungen 93, 95 durch andere elektronische Schaltungsmittel ersetzt werden, die die Schalter 73, 75 aufgrund anderer Kriterien derart ein- und ausschalten, dass eine Impulsfolge mit variierender Impulsbreite erzeugt wird und die Impulse nach dem Glätten dann eine Wechselspannung bilden.

Beispielsweise könnten Steuer- und Regelmittel vorgesehen werden, die einen Rechner, etwa einen Mikroprozessor, aufweisen und die Einschaltdauern und Einschaltabstände der Schalter 73, 75 aufgrund eines digitalen Rechen- und Regelprozesses festlegen. Bei derart digital arbeitenden Regelmitteln kann ebenfalls noch ein eine sinusförmige Spannung erzeugender Referenz-Spannungsgeber 91 vorhanden sein, wobei aber statt dessen eventuell vom Rechner ein digitales, zeitlich variierendes Referenzsignal erzeugt werden kann.

Remtec AG, Zürich (Schweiz)

PATENTANSPRÜCHE

1. Einrichtung zum Überbrücken von Ausfällen der Netz-Wechselspannung ($U_N$), mit einem zum Anschliessen an das Wechselspannungsnetz (1) bestimmten Wechselspannungs-Eingang (11), einem zum Anschliessen mindestens eines elektrischen Verbrauchers (7) bestimmten Wechselspannungs-Ausgang (21), einem zwischen dem Wechselspannungs-Eingang (11) und dem Wechselspannungs-Ausgang (21) geschalteten Transformator (31), einer aufladbaren Batterie (55), einem Wechselrichter (71) zum Wechselrichten von aus der Batterie (55) stammender elektrischer Energie und Steuer- sowie Regelmitteln (61, 91, 93, 95), um beim Betrieb auch beim Ausfallen der Netz-Wechselspannung ($U_N$) am Wechselspannungs-Ausgang (21) eine Wechselspannung ($U_L$) aufrecht zu halten, dadurch gekennzeichnet, dass der Wechselrichter (71) über einen Gleichrichter (33) mit dem Wechselspannungs-Eingang (11) und über mindestens einen spannungserhöhenden Gleichspannungswandler (59) mit der Batterie (55) verbunden ist und dass der Transformator (31) zum Aufwärtstransformieren ausgebildet ist.

2. Einrichtung nach Anspruch 1, dadurch gekennzeichnet, dass der Transformator ein Autotransformator (31) ist, der für eine Spannungserhöhung ausgebildet ist, die, bezogen auf die Primärspannung, vorzugsweise mindestens 10 % und vorzugsweise höchstens 30 % und beispielsweise mindestens 15 % und höchstens 25 % beträgt.

3. Einrichtung nach Anspruch 1 oder 2, dadurch gekennzeichnet, dass der Transformator (31) zwischen den Wechselspannungs-Eingang (119) und den Gleichrichter (33) geschaltet ist.

4. Einrichtung nach Anspruch 1 oder 2, dadurch gekennzeichnet. dass der Transformator (131, 231) zwischen den Wechselrichter (171, 271) und den Wechselspannungs-Ausgang (121, 221) geschaltet ist.

5. Einrichtung nach einem der Ansprüche 1 bis 4, gekennzeichnet durch eine mit dem Gleichspannungswandler (59) verbundene Steuer- und Regelschaltung (61), um den Gleichspannungswandler (59) derart zu steuern und regeln, dass keine dem Wechselrichter (71) beim Betrieb zugeführte Gleichspannung ($U_+$, $U_-$) betragsmässig unter einen Minimalwert ($U_{min}$) absinkt, wobei diese Steuer- und Regelschaltung (61) und der Gleichspannungswandler (59) vorzugsweise derart ausgebildet sind, dass dem Wechselrichter (71) dann und nur dann vom Gleichspannungswandler (59) elektrische Energie zugeführt wird, wenn eine vom Gleichrichter (33) zum Wechselrichter gelieferte Gleichspannung betragsmässig auf oder unter den Minimalwert ($U_{min}$) absinkt.

6. Einrichtung nach einem der Ansprüche 1 bis 5, dadurch gekennzeichnet, dass der Gleichrichter (33) sowie der bzw. die Gleichspannungswandler (59) einen Ausgang zur Abgabe einer bezüglich Masse positiven Gleichspannung und einen Ausgang zur Abgabe einer bezüglich Masse negativen Gleichspannung aufweisen, dass der Wechselrichter (71) zwei steuerbare, elektronische, beispielsweise durch Feldeffekttransistoren gebildete Schalter (73, 75) aufweist, dass der eine Schalter (73) eingangsseitig mit den beiden zum Abgeben einer positiven Gleichspannung dienenden Ausgängen und der andere Schalter (75) eingangsseitig mit den beiden zum Abgeben einer negativen Gleichspannung dienenden Ausgängen verbunden ist, dass die beiden Schalter (73, 75) ausgangsseitig miteinander verbunden sind und dass mit Steueranschlüssen der Schalter (73, 75) verbundene elektronische Steuer- sowie Regelmittel (91, 93, 95) vorhanden sind, um die Schalter (73, 75) beim Betrieb derart zu schalten, dass diese durch Ein- und Ausschalten der ihnen vom Gleichrichter (33) und/oder vom Gleichspannungswandler (59) zugeführten Gleichspannungen $(U_{+}, U_{-})$ die vom Wechselrichter (71) zu erzeugende Wechselspannung $(U_L)$ bilden.

7. Einrichtung nach Anspruch 6, dadurch gekennzeichnet, dass die elektronischen Steuer- und Regelmittel (91, 93, 95) des Wechselrichters (71) ausgebildet sind, um beim Betrieb die Einschaltdauern und/oder -abstände der Schalter (73, 75) derart zu ändern, dass die vom Wechselrichter (71) erzeugte Wechselspannung einen mindestens annähernd zeitlich konstanten Scheitelwert hat, so dass vorzugsweise der Scheitelwert und der Effektivwert der dem Wechselspannungs-Ausgang (21) zugeführten Wechselspannung $(U_L)$ gleich den entsprechenden Sollgrössen der Netz-Wechselspannung $(U_N)$ sind.

8. Einrichtung nach Anspruch 6 oder 7, dadurch gekennzeichnet, dass zwischen den Schaltern (73, 75) und dem Wechselspannungs-Ausgang (21) mindestens ein Filter (81, 83) geschaltet ist, das einen Tiefpass oder eventuell einen Bandpass bildet.

9. Einrichtung nach einem der Ansprüche 6 bis 8, dadurch gekennzeichnet, dass die Steuer- und Regelmittel (91, 93, 95) des Wechselrichters (71) ausgebildet sind, um eine erste und eine zweite, zeitlich variierende Grenzspannung $(U_C, U_H)$ zu erzeugen und die Schalter (73, 75) derart zu schalten, dass eine durch teilweises Glätten einer von den Schaltern (73, 75) gelieferten Impulsfolge gebildete Wechselspannung $(U_X)$ zwischen den zwei Grenz-

spannungen ($U_C$, $U_H$) liegt, wobei die Steuer- und Regelmittel (91, 93, 95) beispielsweise ausgebildet sind, um noch eine zwischen der ersten und zweiten Grenzspannung ($U_C$, $U_H$) liegende dritte Grenzspannung ($U_D$) und eine zwischen dieser und der zweiten Grenzspannung ($U_H$) liegende vierte Grenzspannung ($U_G$) zu erzeugen, so dass vorzugsweise die erste und dritte Grenzspannung ($U_C$, $U_D$) kleiner und die zweite und vierte Grenzspannung ($U_H$, $U_G$) grösser sind als eine eine Sinusfunktion der Zeit (t) bildende Referenz-Spannung ($U_R$) und wobei die Steuer- und Regelmittel (91, 93, 95) ferner beispielsweise ausgebildet sind, und beim Absinken der genannten, aus der Impulsfolge gebildeten Wechselspannung ($U_X$) auf die erste Grenzspannung ($U_C$) jeweils den vom Gleichrichter (33) und/oder dem Gleichspannungswandler (59) mit einer positiven Gleichspannung versorgten Schalter (73) so lange einzuschalten, bis die genannte Wechselspannung ($U_X$) auf die dritte Grenzspannung ($U_D$) angestiegen ist, und beim Ansteigen der genannten Wechselspannung ($U_X$) auf die zweite Grenzspannung ($U_H$) den andern Schalter (75) einzuschalten, bis die genannte Wechselspannung ($U_X$) auf die vierte Grenzspannung ($U_G$) abgesunken ist.

10. Einrichtung nach einem der Ansprüche 1 bis 9, dadurch gekennzeichnet, dass zum Aufladen der Batterie (55) ein Batterieladeteil (53) vorhanden ist, dessen Eingang, bezogen auf die Richtung des Energieflusses vom Wechselspannungs-Eingang (11) zum Wechselspannungs-Ausgang (21), vor dem Transformator (31) und vor dem Gleichrichter (33) mit dem Wechselspannungs-Eingang (11) verbunden ist und der einen Gleichrichter sowie einen diesen mit der Batterie (55) verbindenden Gleichspannungswandler aufweist, so dass der Batterie (55) vom Wechselspannungs-Eingang (11) elektrische Energie zugeführt werden kann, ohne dass sie einen mit der Frequenz der Netz-Wechselspannung $(U_N)$ arbeitenden Transformator passiert.

Fig.1

1/3

0165898

# Fig. 2

# Fig. 3

Fig.4

Fig.5